# FASCICULE DE BREVET EUROPEEN

(11) **EP 3 765 362 B1**
(45) Date de publication et mention de la délivrance du brevet: **23.11.2022**
(21) Numéro de dépôt: 19709961.7
(22) Date de dépôt: 13.03.2019
(51) Int. Cl.: B64C 27/24, B64C 27/26, B64C 27/30

(54) **AERODYNE HYBRIDE DE TYPE VTOL OU STOL (CALAGE ROTOR)**
HYBRIDER AERODYN VOM VTOL- ODER STOL-TYP (ROTORVERKEILUNG)
HYBRID AERODYNE OF THE VTOL OR STOL TYPE (ROTOR WEDGING)

(30) Priorité: 13.03.2018 FR 1852171
(43) Date de publication de la demande: 20.01.2021
(73) Titulaire: Innostar, 92320 Chatillon (FR)
(72) Inventeur: SIMON, Jean-Michel, 92320 CHATILLON (FR)
(74) Mandataire: Lavialle, Bruno François Stéphane
(86) Numéro de dépôt international: PCT/EP2019/056319
(87) Numéro de publication internationale: WO 2019/175265

(56) Documents cités:
- WO-A1-2017/021608
- US-A1- 2009 321 573
- US-A1- 2016 347 446
- US-B1- 6 234 422

## Description

L'invention concerne un aérodyne hybride à décollage et/ou atterrissage vertical ou court, du type drone, permettant à l'aérodyne de décoller et/ou d'atterrir verticalement ou sur de courtes distances, puis de se mouvoir horizontalement à grande vitesse, de taille petite ou moyenne doté d'une autonomie de vol importante par exemple pour des missions de surveillance côtière, l'aérodyne hybride étant du type équipé d'une voilure fixe et d'une voilure tournante, apte à être immobilisée en vol de croisière.

### ARRIERE PLAN DE L'INVENTION

L'invention s'inscrit dans un état de la technique nombreux et varié comme par exemple ceux rappelés dans les documents WO2017021608 et US6234422.

L'idée d'utiliser, pour la phase de vol verticale (décollage et atterrissage), une ou des mono pales dans des concepts de « stop rotor » hybrides VTOL (acronyme anglo-saxon pour décollage et atterrissage vertical) est une idée très ancienne. En effet, une mono pale présente, de façon évidente, un intérêt vis-à-vis de la traînée de la voilure tournante quand la rotation de celle-ci est arrêtée. La minimisation de la traînée est en effet l'un des problèmes à résoudre dans ce genre de machines volantes si l'on souhaite atteindre des vitesses importantes en allure de croisière. Aucun de ces systèmes n'a réellement été développé et commercialisé.

On pense que les raisons qui ont conduit à l'échec de ces systèmes, et qui font mieux comprendre l'intérêt de la présente invention, sont les suivantes :
- dans le cas où la voilure tournante doit être aérodynamiquement « cachée » en vol horizontal, les mécanismes proposés sont trop complexes, et l'opération comporte des phases d'instabilité aérodynamique au moment où la voilure est mise à l'abri, après le décollage et la transition en vol de croisière et au moment où elle est découverte pour l'atterrissage,
- dans le cas où le rotor n'est pas caché et laissé libre dans le flux d'air (ou vent relatif) en vol de croisière, de deux choses l'une pour avoir une puissance de décollage satisfaisante :
   soit disposer d'un diamètre du rotor important, et, par conséquent, une longueur de pale assez grande qui conduit à des instabilités au moment de l'arrêt et/ou de la remise en rotation du rotor, quand le rotor perd l'effet stabilisateur de la force centrifuge. En effet, les pales d'un rotor, pour être efficaces aérodynamiquement, doivent être relativement fines et donc relativement souples, et présenter de bonnes performances d'aéroélasticité, telles que celles des pales de rotors d'hélicoptères modernes,
   soit mettre en œuvre des pales plus courtes et plus rigides, donc plus stables, mais alors la puissance nécessaire pour assurer la sustentation est très élevée, ce qui nuit à l'intérêt du concept.

L'invention concerne un aérodyne comprenant au moins deux mono-pales, espacés longitudinalement le long de l'axe de roulis de l'appareil, comme par exemple illustré par les figures 16a et 16b du document WO2017021608.

Ces figures représentent schématiquement, respectivement en vol stationnaire ou vertical et en vol horizontal ou de croisière, un aérodyne comprenant une voilure fixe supportée par un fuselage, qui supporte également une voilure mobile de sustentation en vol vertical, et dont la rotation est arrêtée en fin de phase de transition du vol vertical au vol horizontal de croisière à grande vitesse.

La voilure mobile comporte deux mono-pales contrarotatives dont les axes de rotation sont décalés l'un de l'autre le long de l'axe de roulis de l'aérodyne. En vol de croisière chacune des mono-pales est orientée longitudinalement vers l'arrière de l'aérodyne, seuls les contrepoids et les parties rigides qui les supportent étant dirigés vers l'avant de leur mât rotor respectif.

II est important de noter qu'il est possible d'installer une configuration avec des rotors intermédiaires entre les mono-pales avant et arrière, ces rotors pouvant être mono ou bipale.

L'invention a pour but d'optimiser de manière réaliste les performances d'un aérodyne de ce type.

L'amélioration des performances tient d'une part dans la mise en œuvre de moyens adaptés à diminuer sa traînée en vol de croisière et, d'autre part, dans la mise en œuvre de moyens pour améliorer ses allures dans les périodes de transition entre vol vertical et vol horizontal, après le décollage et avant l'atterrissage.

Pour ce qui concerne la question de la traînée, on mentionnera l'existence de certaines solutions proposées dans l'état de la technique illustré, par exemple, par les documents US 2009/321573,

US 3.612.444 et US 6.622.962 qui consistent à enfermer la voilure tournante dans un logement soit prévu à l'intérieur de la surface aérodynamique extérieure du fuselage de l'appareil, soit dans un boîtier séparé de ce fuselage et le surmontant, avec lui-même ses caractéristiques aérodynamiques propres. Ces solutions sont peu satisfaisantes parce que complexes à mettre en œuvre ou imparfaites dans les résultats qu'elles procurent.

### OBJET DE L'INVENTION

A cet effet, la présente invention a pour objet un aérodyne hybride comprenant un fuselage, une voilure fixe et une voilure tournante apte à être immobilisée en vol de croisière de l'aérodyne, la voilure tournante étant apte à produire de la portance par sa rotation en phase de vol vertical et à être immobilisée et stockée longitudinalement en phase de vol de croisière, du type comportant au moins une mono-pale à contrepoids située au sommet et à l'avant du fuselage, ladite mono-pale étant articulée autour d'un axe, perpendiculaire à l'axe de rotation du rotor, sensiblement au niveau dudit axe de rotation du mât rotor,
caractérisé en ce qu'il comprend un élément de structure porté par le fuselage et mobile par rapport à celui-ci entre une position hors service, écartée de la voilure tournante sous celle-ci et une position de service, en saillie de la surface extérieure du fuselage, dans laquelle il vient au contact d'au moins l'extrémité de ladite mono-pale de la voilure tournante quand celle-ci est arrêtée longitudinalement pour la caler par rapport au fuselage.

Cet élément de structure immobilise dans les trois dimensions la mono pale et donc la totalité de la pale. Il peut être limité au maintien de la seule extrémité de la pale mais de manière préférée il s'étendra sous la totalité de la longueur de la pale.

Dans cette réalisation préférée, cet élément de structure mobile est profilé de manière qu'avec la pale qu'il vient contacter par le dessous, il constitue une excroissance supérieure monolithique du fuselage qui offre une traînée minimale lors de la vitesse de croisière de l'aérodyne. Il faut également noter que la position ou l'état hors service de cet élément de structure mobile doit être tel qu'il n'interfère pas avec la rotation de la voilure tournante sans se soucier particulièrement de l'aspect aérodynamique de cette position qui a très peu d'importance dans la phase de vol concernée. De préférence, cette position sera telle que la surface supérieure de l'élément sera proche ou affleurera la surface extérieure du fuselage.

On indiquera que cet élément possède une surface d'appui supérieure dont le profil est en correspondance de forme avec celui la face inférieure des mono-pales au contact de laquelle il est porté. Cet appui sera réalisé sous contrainte contre la voilure tournante de manière à solidariser le plus possible pale et élément. Dans un mode de réalisation avantageux, cette contrainte d'appui peut être obtenue par la création d'une aspiration de la voilure tournante (mono-pale) contre la face supérieure de l'élément de structure mobile de manière à créer entre eux un effet ventouse. Un revêtement élastiquement compressible peut à cet effet garnir la surface supérieure de l'élément de structure pour à la fois assurer l'élasticité de l'appui, la protection des pièces en contact et l'étanchéité du contact si une aspiration est mise en œuvre.

Il sera avantageux, selon l'invention, de prévoir un espace restreint entre une mono-pale et le contrepoids de la mono-pale contrarotative (ou de la pale d'un rotor bipale) qui la suit afin de réduire au minimum les discontinuités de la surface supérieure de cette excroissance monolithique que forment, sur le fuselage, l'élément de structure et les pales sous lesquelles il s'appuie et réduire les zones de turbulence aérodynamique. On peut à cet égard noter que la surface supérieure de l'élément de structure mobile comporte un relief au niveau de l'interstice (espace restreint) séparant deux pales successives. Ce relief vient avantageusement combler cet espace en position active de l'élément mobile de structure bien qu'il puisse constituer une petite solution de continuité de la surface supérieure du fuselage en position inactive (lors de la rotation des mono-pales), ce « défaut » n'ayant aucune conséquence sur les qualités aérodynamiques de l'appareil dans cette phase de vol.

La recherche d'une traînée minimale en phase de vol de croisière passe par un positionnement de pales précis et le moins perturbant possible pour l'écoulement d'air environnant. C'est pour cette raison qu'on cherchera à aligner le plus strictement possible les extrémités voisines des pales dans leur position de stockage pour éliminer les reliefs et les solutions de continuité des surfaces en contact avec l'écoulement d'air environnant.

Ainsi, le profil de la surface supérieure de l'élément de structure mobile sera, pour au moins sa partie en regard de l'extrémité de chaque pale en correspondance de forme avec le profil de la face inférieure de celle-ci. Et pour assurer cette continuité de surface entre l'extrados d'une pale et celui de la suivante (ou du contrepoids de cette dernière), une pale plane sera immobilisée en position de stockage sous un pas nul tandis qu'une pale vrillée sera immobilisée sous un pas négatif. Ce pas est le pas collectif d'une voilure tournante comportant deux (ou plus) rotor de sustentation.

Selon une autre caractéristique de l'invention, le fuselage présentant une partie avant plongeante par rapport à son axe de roulis, le mât rotor de la mono-pale avant est situé sensiblement à la jonction de cette partie avec la partie principale du fuselage. Ainsi, le disque rotor que forme cette mono-pale, lorsqu'elle tourne, peut-il être incliné vers l'avant et vers le bas sous un angle relativement important puisque le fuselage s'abaisse alors que vers l'arrière le basculement du disque rotor est limité à une valeur inférieure à cinq degrés (de préférence deux degrés), la limite étant l'obstacle à la rotation que constitue le fuselage. Cette inclinaison (ou basculement) avant et/ou arrière est obtenu en jouant sur le pas cyclique de la mono-pale.

Dans un mode de réalisation de l'aérodyne à deux mono-pales, alors que le fuselage possède une partie arrière plongeante par rapport à son axe de roulis, le mât rotor de la mono-pale arrière est situé à la jonction de cette partie avec la partie arrière du fuselage. Ainsi, le disque rotor que forme cette mono-pale, lorsqu'elle tourne, peut s'incliner également d'un angle important vers l'arrière et vers le bas en fonction de la forme plus ou moins abrupte de cette partie arrière. De manière préférée, l'inclinaison vers l'avant de ce disque rotor est limitée à une valeur inférieure à deux degrés.

Ces dispositions géométriques entre la voilure tournante et le fuselage présentent l'avantage de placer cette dernière au plus près du sommet du fuselage ce qui autorise une course relativement faible de l'élément mobile de structure susdit tout en conservant une bonne maniabilité de l'appareil afin d'aider au passage d'une phase de vol à l'autre (acquisition d'une vitesse horizontale suffisante avec la voilure tournante et, à l'inverse, réduction aisée de cette vitesse) pour une assiette sensiblement nulle de l'appareil.

Selon une autre caractéristique secondaire de l'invention, la deuxième partie de la mono-pale avant, qui porte le contrepoids, est évidée.

En outre, chaque disque rotor dispose d'une possibilité d'inclinaison latérale par rapport au fuselage pour maîtriser le roulis et le lacet de l'appareil.

Dans ce mode de réalisation de l'invention à deux mono-pales, les disques rotor sont tels que leur projection sur un plan horizontal comporte une zone d'intersection. Selon une variante de ce mode de réalisation, le diamètre du disque rotor avant et inférieur à celui du disque rotor arrière.

Dans le cas où la voilure fixe comporte une aile principale transversale au fuselage, la zone d'intersection susdite est dans une première réalisation en avant de la projection horizontale de cette aile principale. Dans une seconde réalisation, cette zone d'intersection contient le foyer de portance de cette aile principale.

De manière avantageuse, l'aile fixe comporte des volets rabattables verticalement.

Enfin, il sera avantageux de pourvoir l'aérodyne selon l'invention d'un empennage en H, en U ou en V vers le bas.

Il est possible de prévoir, entre les deux mono-pales avant et arrière susdits, d'autres éléments de voilure tournante bipales (un ou deux rotors supplémentaires), si la longueur du fuselage le permet, dont les deux pales coopèrent, en position de stockage avec l'élément de structure mobile pour obtenir avec les mêmes moyens les mêmes avantages que ceux déjà décrits en terme d'amélioration de la traînée en vol de croisière. Une autre variante qui relève également de l'invention consiste à prévoir à la place du rotor mono-pale arrière, un rotor bipale. Dans ce cas il n'y aurait pas d'intersection des disques rotor.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 illustre une machine volante conforme à l'invention dans sa configuration de vol vertical,
- la figure 2 illustre la machine de la figure 1 en vol de croisière,
- la figure 3 est une vue de côté de l'appareil de l'invention en vol vertical,
- la figure 4 est la même vue de côté que celle de la figure 3, l'appareil étant en allure de croisière,
- la figure 5 est une vue de dessus de l'appareil représenté aux figures précédentes
- les figures 6a, 6b et 6c illustrent schématiquement certaines des inclinaisons possibles des disques rotors de l'aérodyne selon l'invention et
- la figure 7 est un schéma d'une variante de réalisation possible de l'aérodyne selon l'invention.

### DESCRIPTION DETAILLEE DE L'INVENTION

On se reportera tout d'abord aux quatre premières figures.

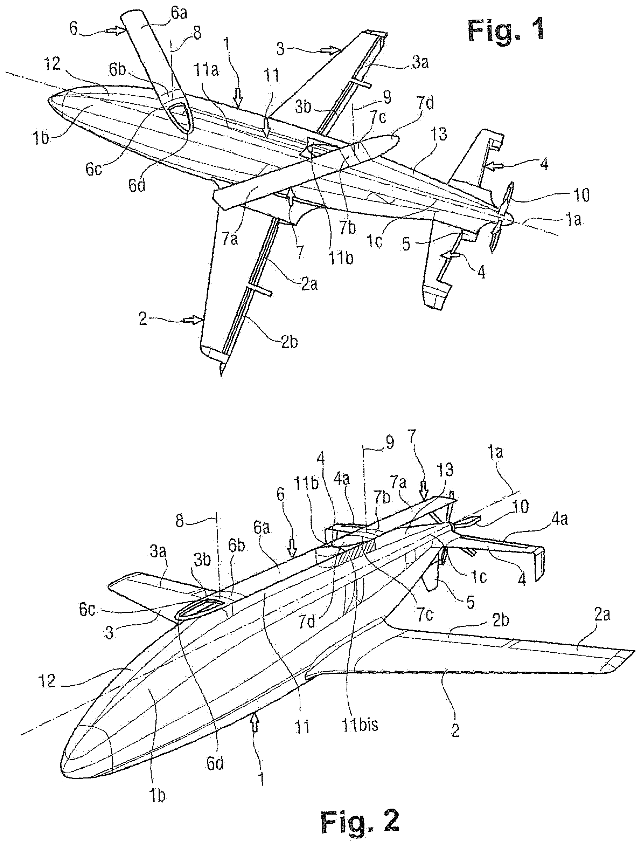

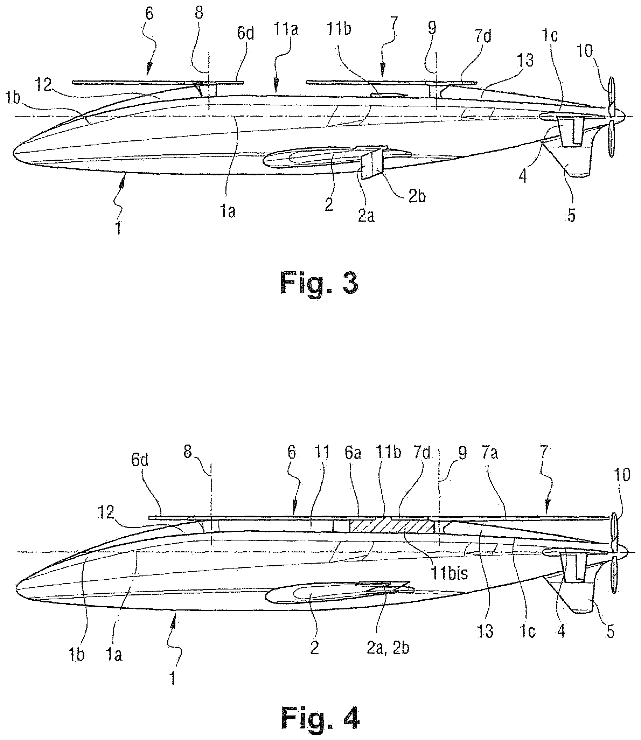

L'aérodyne représenté comporte un fuselage 1 dont l'axe de roulis est noté la. Ce fuselage est équipé d'une voilure fixe comportant une aile principale 2, 3, un empennage 4 en U inversé et une dérive 5, tout cela de manière usuelle et bien connue de l'homme de métier. On aura noté que l'aile 2, 3 possède respectivement des volets 2a, 2b, 3a, 3b, rabattus aux figures 1 et 3, et en service aux figure 2 et 4. De manière connue, les branches horizontales de l'empennage comportent également des volets 4a.

Dans le mode de réalisation représenté à ces figures, l'aérodyne selon l'invention comporte une mono-pale avant 6 et une mono-pale arrière 7. La mono-pale avant 6 comprend une pale active 6a qui génère une portance pendant sa rotation. Cette mono-pale est composée d'une première partie 6b qui porte ladite pale active et constitue la liaison de la pale active à un mât rotor 8 et une deuxième partie 6c qui porte le contrepoids 6d et relie ce dernier au mât rotor 8. On notera que la partie 6c et le contrepoids 6d sont évidés pour améliorer leurs performances aérodynamiques.

L'ensemble ainsi constitué par la pale active 6a et la partie rigide 6b qui la porte est articulé autour d'un axe transversal, perpendiculaire à l'axe de rotation du rotor, sensiblement au niveau dudit axe de rotation du mât rotor. Cette disposition est connue en elle-même et rappelée dans le document WO2017021608 déjà cité.

La mono-pale 7 arrière est de même constitution que la pale 6 avec une pale active 7a, un contrepoids 7d et des partie rigides 7b et 7c de liaison de ces deux éléments à un mât rotor 9.

A l'arrière du fuselage, l'aérodyne possède un propulseur 10 (par exemple à hélices) destiné à produire une poussée lors du vol de croisière.

On constate, sur les figures 2 et 4, que chacune des mono-pales est orientée longitudinalement vers l'arrière de l'aérodyne, seuls les contrepoids et les parties rigides qui les supportent étant dirigés vers l'avant de leur mât rotor 8,9 respectif.

L'une des principales caractéristiques de l'invention, dans ce type d'aérodyne, réside dans un élément de structure 11 qui est situé au sommet du fuselage et qui est mobile par rapport à ce dernier entre une position d'effacement à l'intérieur de la surface externe du fuselage de manière à affleurer cette surface ou demeurer au voisinage de celle-ci et une position de service en saillie de cette surface du fuselage. La position d'effacement est représentée aux figures 1 et 3. La position de service est celle représentée aux figures 2 et 4. L'aérodyne est en vol vertical aux figures 1 et 3, les mono-pales tournent en synchronisme de manière contra rotative à partir d'une position de départ précise qui est celle des figures 2 et 4 où elles sont immobilisées longitudinalement au-dessus du fuselage 1. Dans ces dernières figures l'aérodyne est représenté en vol sensiblement horizontal (vol de croisière). La voilure tournante est, pour cette allure, un handicap en ce qui concerne la traînée de l'appareil car cette dernière engendre d'importantes perturbations aérodynamiques et de nombreuses turbulences du vent relatif.

Le mode de réalisation représenté aux figures 1 à 4 est un mode de réalisation préféré.

Dans certains cas, notamment pour des aéronefs de charge utile relativement faible, on peut se satisfaire d'un élément de structure 11bis qui est beaucoup plus court et limité au calage relatif en alignement des mono pales 6 et 7. Cette variante de réalisation est représentée aux figures 2 et 4 par la partie hachurée de l'élément 11 décrit ci-dessus.

Cet élément 11 ou 11bis en saillie du fuselage a plusieurs fonctions.

Il constitue d'abord un élément de calage de la partie 6a de la mono-pale dans une position strictement alignée avec la direction du vent relatif en vol de croisière. Ce calage est obtenu par un appui de l'élément 11 sous la pale en correspondance de forme avec sa surface inférieure. Cet appui peut être contraint mécaniquement en étant forcé par la saillie de l'élément 11 ou pneumatiquement en créant une aspiration de la pale contre la surface supérieure de l'élément 11. Cette surface supérieure 11a sera de préférence recouverte d'une garniture élastique de protection des pièces en contact et, le cas échéant, d'étanchéité de l'aspiration. On notera que, pour une pale vrillée, on aura avantage à immobiliser cette dernière sous un pas collectif négatif de manière que l'extrémité libre de la pale soit dans un plan commun à celui du contrepoids 7d de la mono-pale 7 qui est dans son prolongement.

Il constitue également (dans sa version préférée) un élément de comblement de l'espace séparant la mono-pale de la surface supérieure du fuselage 1, élément profilé dans le sens de l'écoulement du vent relatif. Sa dimension longitudinale permet qu'il soit en appui sous le contrepoids 7d de la pale 7, affermissant l'alignement de celle-ci avec la pale qui la précède. Enfin il possède un relief 11b qui vient se loger entre l'extrémité de la pale 6 et l'extrémité du contrepoids 7d de la pale 7, comblant ainsi la solution de continuité de surface qui nécessairement existe entre les deux pales. On aura avantage à implanter les mâts rotor de manière que l'espace comblé par ce relief 11b soit le plus faible possible.

Cet élément 11 forme enfin une partie supérieure du fuselage dont la surface extérieure est profilée, dans le sens du vent relatif, le plus en continuité possible avec celle du fuselage pour un écoulement des veines d'air sans turbulence. On notera que, quand l'élément 11 est escamoté dans le fuselage comme illustré par la figure 3, l'espace ainsi évidé n'altère pas les propriétés aérodynamiques de l'appareil car il est en vol vertical.

Sur les figures, on a représenté cet élément 11 comme étant monolithique. Ce n'est pas sortir du cadre de l'invention que de le prévoir en plusieurs parties soit dans le sens longitudinal, soit dans le sens transversal avec, pour chacune de ces parties, un actionneur soit commun, soit dédié, pour assurer son déplacement entre les deux états susdits.

Selon une autre caractéristique de l'aérodyne, le fuselage 1 présentant une partie avant 1b plongeante par rapport à son axe de roulis la, le mât rotor 8 de la mono-pale avant 6 est situé sensiblement à la jonction de cette partie avec la partie principale du fuselage. Cette partie plongeante 1b est équipée d'une protubérance fixe 12 profilée, dans l'axe de l'élément 11 pour favoriser encore un meilleur écoulement aérodynamique.

De manière analogue le fuselage 1 présentant une partie arrière 1c, également plongeante par rapport à son axe de roulis la, le mât rotor 9 de la mono-pale 7 arrière est situé sensiblement à la jonction de cette partie avec la partie principale du fuselage. Cette partie plongeante 1c est équipée d'une protubérance fixe 13 profilée, dans le prolongement de l'élément 11 pour favoriser aussi l'écoulement aérodynamique.

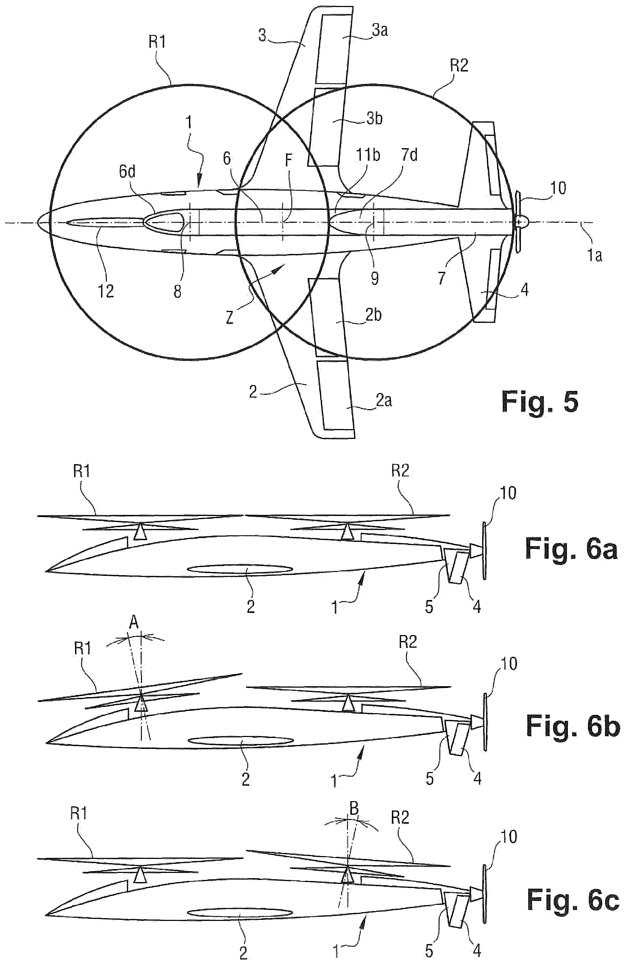

L'avantage de ces positions s'explique en regard des figures 6a, 6b et 6c. On y a représenté le disque rotor R1 et le disque rotor R2 des mono-pales avant 6 et arrière 7 dans chacune de trois allures de vol de l'appareil. La première allure (figure 6a) correspond à un vol vertical ou stationnaire. L'assiette des disques rotor R1 et R2 est horizontale. A la figure 6b, l'assiette du disque rotor R1 est inclinée sur l'avant pour conférer une vitesse horizontale à l'aérodyne (sans changer son assiette générale) tandis que le disque R2 reste horizontal et assure l'essentiel de la portance. A la figure 6c, l'assiette du disque R2 est inclinée vers l'arrière et celle du disque R1 est horizontale, pour créer une allure horizontale arrière à l'appareil, le cas échéant. Bien entendu, cette faculté d'inclinaison des disques rotors peut s'ajouter à la phase consistant, pour changer d'allure, à modifier l'assiette de l'appareil en faisant varier la répartition de la portance entre le rotor avant et le rotor arrière, comme dans les appareils connus, avec cependant les inconvénients induits au niveau de la traînée du second rotor.

On comprend que dans le cas des figures, grâce à l'emplacement des mâts rotors, on peut disposer d'une amplitude A de basculement de l'assiette du disque R1 rotor avant vers l'avant, et B de basculement du disque R2 rotor arrière, vers l'arrière relativement importante (de 5 à 25 degrés par exemple, en fonction de la pente plus ou moins abrupte du fuselage à cet endroit). Le basculement inverse de ces disques est quant à lui limité à un ou deux degrés pour ne pas risquer d'heurter le fuselage. Des moyens de butée sont prévus à cet effet au niveau du mât rotor. L'avantage de cette disposition tient à la possibilité de placer les disques rotors au plus proche du sommet du fuselage donc d'obtenir un maître couple réduit de l'appareil pour son allure de vol horizontale. Bien entendu, chaque disque rotor disposera également d'un degré de liberté permettent une inclinaison latérale de part et d'autre du fuselage, pour notamment pouvoir maîtriser ou commander son comportement en lacet et roulis.

A la figure 5, l'aérodyne est représenté vu de dessus. On y retrouve la plupart des éléments déjà décrits avec les mêmes références. On constate que les disques rotors sont sécants de sorte que leur projection horizontale définit une zone d'intersection Z. Dans la figure, cette zone d'intersection Z est située à l'aplomb du foyer F de portance de l'aile principale 2,3 de l'appareil. Cette géométrie permet d'obtenir un bon compromis entre le flux d'air traversant les disques rotors et la perturbation de ce flux par la voilure fixe de l'appareil lors des phases. Dans une variante non représentée, l'aile principale de la voilure fixe de l'appareil est située plus à l'arrière et la projection horizontale de la zone Z d'intersection des disques rotors est en avant de l'aile principale.

La figure 5 illustre un aérodyne dans lequel les deux disques rotors R1 et R2 sont identiques. On aura remarqué que dans leur état d'inactivité, les mono-pales présentent leur contrepoids vers l'avant de l'appareil. Le contrepoids 6d de la mono-pale avant est en porte-à-faux au-dessus du nez du fuselage et constitue une prise au vent relatif dont on peut diminuer l'importance en prévoyant d'installer une mono-pale avant plus courte qu'à l'arrière afin de diminuer l'importance dimensionnelle du contrepoids. Ainsi l'une des caractéristiques de l'invention réside-t-elle dans un disque rotor avant R1 de diamètre plus petit que celui du disque rotor R2 arrière.

Les volets 2a, 2b, 3a, 3b de l'aile principale 2,3 permettent, rabattus pour le décollage ou l'atterrissage de l'appareil, de diminuer la perturbation aérodynamique provoquée par la voilure fixe dans le flux de la voilure tournante.

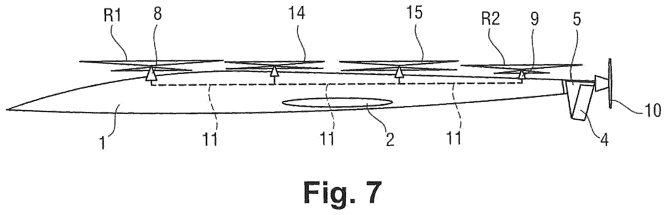

Le schéma de la figure 7 illustre un aérodyne dans lequel on a mis en place une voilure tournante comportant au moins un (ici deux) rotor intermédiaire 14,15. Le fuselage comportera bien entendu un élément tel que celui 11 décrit ci-dessus, en plusieurs parties séparées par les mâts rotors pour caler chacune des pales (mono ou bi) des rotors intermédiaires, à l'instar des mono-pales avant et arrière.

Le fonctionnement de l'aérodyne selon l'invention se déroule selon la procédure suivante.

On identifiera cinq allures de vol : la phase décollage vertical, la phase de transition entre vol vertical et vol de croisière, la phase de vol de croisière, la phase de transition entre vol de croisière et vol vertical d'atterrissage et la phase de vol vertical d'atterrissage.

La particularité de cette procédure tient aux deux phases transitoires. En effet, les moyens mis en œuvre dans l'invention permettent que chacune de ces phases transitoires entre le vol de croisière et l'un des deux vols verticaux ascendant et descendant passent par un état où :
la vitesse de rotation de la voilure tournante est supérieure à 10% de la vitesse de rotation nominale, le pas de chaque mono pale est réduit jusqu'à ce qu'il n'y ait plus aucun effort de portance et l'articulation transversale de chaque mono pale sur l'arbre rotor est bloquée dans une position telle que la mono pale soit perpendiculaire à l'arbre rotor.

Il faut entendre par vitesse nominale la vitesse de rotation de la voilure tournante qui permet le décollage de l'appareil. En outre la valeur de 10% donnée ci-dessus est indicative d'une vitesse de rotation qui doit être suffisante pour que la pale puisse résister, c'est-à-dire être rendue quasiment indéformable, à des efforts « parasites » comme par exemple ceux dus à la vitesse (réduite) du vol de croisière pendant cette phase de transition

Ainsi la procédure complète se déroule-t-elle de la manière suivante :
a/ Décollage vol vertical:
   - Démarrage en rotation de la voilure tournante 6,7 sous un pas collectif nul,
   - Libération des articulations des mono-pales au-delà d'un certain seuil de rotation (10% de la vitesse nominale) pour qu'une force centrifuge suffisante confère à la pale une indéformabilité suffisante à l'encontre de forces aérodynamiques parasites,
   - Augmentation de la vitesse de rotation jusqu'à la vitesse de rotation nominale,
   - Augmentation du pas collectif des pales 6,7 pour permettre le décollage,
b/ Transition décollage/croisière :
   - Modification de l'assiette de l'appareil (vers une assiette négative) par modification de la répartition de la portance entre les disques rotors R1 et R2 (R2 plus porteur) et/ou inclinaison de R1 vers l'avant (figure 6b),
   - Mise en route du système propulsif 10 (à n'importe quel moment pendant cette phase avec le pas des hélices en drapeau sans engendrer de poussée,
   - Au voisinage d'une vitesse horizontale critique assurant une portance suffisante de la voilure fixe, rectification (éventuelle) de l'assiette de l'appareil, augmentation du pas des hélices du système propulsif 10,
   - Annulation du pas des pales de la voilure tournante et diminution de la vitesse de rotation de cette voilure,
   - Blocage de l'articulation transversale des mono pales au rotor, tant que la vitesse de rotation engendre la force centrifuge susdite,
   - Arrêt de la rotation et indexation mécanique de la position d'arrêt de chaque pale, (on notera à ce propos que l'indexation des pales dans leur position de stockage sera assurée par tout moyen mécanique motorisé mis en œuvre après l'arrêt de leur rotation de vol).
   - Sortie de l'élément 11 jusqu'au contact des pales avec verrouillage mécanique ou pneumatique de celles-ci sur l'élément 11.
c/ Vol de croisière sous la poussée du système 10.
d/ Transition vol de croisière, vol vertical d'atterrissage.
   - Diminution de la poussée du propulseur 10 jusqu'à atteindre une vitesse légèrement supérieure à la vitesse de décrochage (par exemple 20% au-dessus de celle-ci),
   - Abaissement de l'élément 11 et libération des pales,
   - Mise en rotation des pales sous pas nul,
   - Déblocage des articulations des pales au-delà de la vitesse minimale susdite,
   - Augmentation de la vitesse de rotation jusqu'à la vitesse nominale, puis augmentation du pas,
   - Arrêt du propulseur 10.
e/ Vol vertical d'atterrissage semblable à tout appareil à voilure tournante.

L'invention n'est pas limitée aux exemples décrits mais couvre toute variante de réalisation entrant dans le cadre des revendications.

## Revendications

1. Aérodyne hybride comprenant un fuselage (1), une voilure fixe (2, 3, 4, 5) et une voilure tournante (6, 7) apte à être immobilisée en vol de croisière de l'aérodyne, la voilure tournante étant apte à produire de la portance par sa rotation en phase de vol vertical et à être immobilisée et stockée longitudinalement en phase de vol de croisière, du type comportant au moins une mono-pale (6) à contrepoids (6d) située au sommet et à l'avant du fuselage (1), ladite mono-pale étant articulée autour d'un axe perpendiculaire à l'axe de rotation du rotor, sensiblement au niveau dudit axe de rotation du mât rotor,
**caractérisé en ce qu'**il comprend un élément (11) de structure porté par le fuselage et mobile par rapport à celui-ci entre une position hors service, écartée de la voilure tournante sous celle-ci et une position de service, en saillie de la surface extérieure du fuselage, dans laquelle il vient au contact d'au moins l'extrémité de ladite mono-pale (6) de la voilure tournante quand celle-ci est arrêtée longitudinalement pour la caler par rapport au fuselage (1).

2. Aérodyne selon la revendication 1, **caractérisé en ce que** cet élément (11) possède une surface supérieure d'appui (11a) dont le profil est en correspondance de forme avec celui la face inférieure de ladite mono-pale (6).

3. Aérodyne selon la revendication 2, **caractérisé en ce que** la surface d'appui supérieure (11a) de l'élément (11) correspond à la surface inférieure d'une mono-pale plane immobilisée sous un pas nul.

4. Aérodyne selon la revendication 2, **caractérisé en ce que** la surface d'appui supérieure (11a) de l'élément (11) correspond à la surface inférieure d'une mono-pale vrillée, immobilisée sous un pas négatif.

5. Aérodyne selon l'une des revendications précédentes, **caractérisé en ce que** l'appui de l'élément de structure (11) sous la mono-pale (6) est réalisé sous contrainte contre la voilure tournante de manière à solidariser le plus possible pale et élément.

6. Aérodyne selon la revendication 5, **caractérisé en ce que** la contrainte d'appui est obtenue par aspiration entre pale et élément.

7. Aérodyne selon l'une des revendications précédentes, **caractérisé en ce qu'**une garniture élastiquement compressible recouvre la surface supérieure (11a) de l'élément de structure pour à la fois assurer l'élasticité de l'appui, la protection des pièces en contact et, le cas échéant, l'étanchéité du contact.

8. Aérodyne selon l'une des revendications précédentes, **caractérisé en ce que** l'élément de structure (11) vient au contact de ladite mono-pale (6) sur sa longueur.

9. Aérodyne selon l'une des revendications précédentes, **caractérisé en ce que** la voilure tournante comporte une deuxième mono-pale (7) au sommet du fuselage (1) et à l'arrière de la première mono-pale (6) susdite et contrarotative par rapport à cette dernière, **en ce qu'**un espace restreint sépare la première mono-pale et le contrepoids (7d) de la deuxième mono-pale (7) et **en ce que** l'élément (11) de structure mobile vient en appui contre les extrémités adjacentes de la pale (6) et du contrepoids (7d) pour les caler en alignement l'un par rapport à l'autre.

10. Aérodyne selon la revendication 9, **caractérisé en ce que** la surface supérieure (11a) de l'élément de structure (11) mobile comporte un relief (11b) pour combler l' espace restreint séparant deux pales (6,7) successives.

11. Aérodyne selon l'une des revendications 9 et 10, **caractérisé en ce qu'**il comporte au moins une voilure tournante bipale (14) située au sommet du fuselage entre les deux mono-pales (6, 9) susdits, **en ce que** des espaces restreints séparent les pales successives dans leur position de stockage et **en ce que** l'élément de structure mobile comporte des reliefs pour combler les espaces restreints séparant deux pales successives.

12. Aérodyne selon l'une des revendications 9 à 11, **caractérisé en ce que** le fuselage (1) présentant une partie (1b) avant plongeante par rapport à son axe de roulis (la), le mât rotor (8) de la mono-pale avant (6) est situé sensiblement à la jonction de cette partie avec la partie principale du fuselage, autorisant ainsi une inclinaison du disque rotor (R1) vers le bas et vers l'avant du fuselage autour de l'axe perpendiculaire susdit.

13. Aérodyne selon la revendication 12, **caractérisé en ce qu'**il comporte des moyens pour limiter l'inclinaison (A) du disque rotor (R1) formé par ladite mono-pale (6) autour de l'axe transversal au plus à cinq, de préférence au plus à deux, degrés d'angle vers le haut et vers l'arrière.

14. Aérodyne selon l'une des revendications 9 à 13, **caractérisé en ce que** le fuselage (1) présentant une partie arrière (1c) plongeante par rapport à son axe de roulis (la), le mât rotor (9) de la mono-pale arrière (7) est situé sensiblement à la jonction de cette partie avec la partie principale du fuselage autorisant ainsi une inclinaison du disque rotor (R2) vers le bas et vers l'arrière du fuselage, autour de l'axe perpendiculaire susdit.

15. Aérodyne selon l'une des revendications 9 à 14, **caractérisé en ce que** la partie de la mono-pale (6) avant qui porte le contrepoids (6d) est évidée.

16. Aérodyne selon la revendication 9, **caractérisé en ce que** les disques rotor (R1, R2) sont tels que leur projection sur un plan horizontal comporte une zone d'intersection (Z).

17. Aérodyne selon la revendication 16, **caractérisé en ce que** la voilure fixe comporte une aile principale (2,3) transversale au fuselage (1), la zone d'intersection (Z) susdite est en avant de la projection horizontale de cette aile principale.

18. Aérodyne selon la revendication 16, **caractérisé en ce que** la voilure fixe comporte une aile principale (2, 3) transversale au fuselage (1), la zone d'intersection (Z) susdite contient le foyer (F) de portance de cette aile principale.

19. Aérodyne selon l'une des revendications 9 à 18, **caractérisé en ce que** les diamètres des disques rotors (R1, R2) sont différents.

20. Aérodyne selon l'une des revendications 17 et 18, **caractérisé en ce que** l'aile fixe comporte des volets (2a, 2b, 3a, 3b) rabattables verticalement.

21. Aérodyne selon l'une des revendications précédentes, **caractérisé en ce que** l'aérodyne possède un empennage (4) en H, en U ou en V vers le bas.

22. Procédure de manœuvre d'un aérodyne conforme à l'une des revendications précédentes, **caractérisée en ce que** chaque phase de transition comporte un état de la voilure tournante dans lequel l'élément de structure mobile est écarté de chaque mono pale, la vitesse de rotation de la voilure tournante est supérieure à 10% de la vitesse de rotation nominale, le pas de chaque mono pale est réduit jusqu'à ce qu'il n'y ait plus aucun effort de portance et l'articulation transversale de la mono pale sur l'arbre rotor est bloquée dans une position telle que la mono pale soit perpendiculaire à l'arbre rotor.

## Patentansprüche

1. Hybrides strömungsgetragenes Luftfahrzeug, umfassend einen Rumpf (1), einen starren Flügel (2, 3, 4, 5) und einen sich drehenden Flügel (6, 7), der geeignet ist, im Reiseflug des strömungsgetragenen Luftfahrzeugs festgestellt zu werden, wobei der sich drehende Flügel geeignet ist, durch seine Rotation in der Senkrechtflugphase den Auftrieb zu erzeugen und in der Reiseflugphase festgestellt und in Längsrichtung aufbewahrt zu werden, vom Typ, der mindestens ein Einzelblatt (6) mit Gegengewicht (6d) umfasst, das sich auf der Oberseite und an der Vorderseite des Rumpfes (1) befindet, wobei das genannte Einzelblatt um eine zur Rotationsachse des Rotors senkrechte Achse angelenkt ist, im Wesentlichen im Bereich der genannten Rotationsachse des Rotormasts,
**dadurch gekennzeichnet, dass** es ein Strukturelement (11) umfasst, das von dem Rumpf getragen wird und in Bezug auf diesen zwischen einer Außerbetriebsstellung, die von dem sich drehenden Flügel unter demselben beabstandet ist, und einer aus der Außenfläche des Rumpfes herausragenden Betriebsstellung beweglich ist, in der es mindestens mit dem Ende des genannten Einzelblattes (6) des sich drehenden Flügels in Kontakt kommt, wenn dieser in Längsrichtung festgestellt ist, um ihn in Bezug auf den Rumpf (1) zu blockieren.

2. Strömungsgetragenes Luftfahrzeug nach Anspruch 1, **dadurch gekennzeichnet, dass** dieses Element (11) eine obere Anlagefläche (11a) umfasst, deren Profil in Formübereinstimmung mit dem Profil der Unterseite des genannten Einzelblattes (6) ist.

3. Strömungsgetragenes Luftfahrzeug nach Anspruch 2, **dadurch gekennzeichnet, dass** die obere Anlagefläche (11a) des Elements (11) der unteren Oberfläche eines flachen Einzelblattes entspricht, das unter einer Nullsteigung festgestellt ist.

4. Strömungsgetragenes Luftfahrzeug nach Anspruch 2, **dadurch gekennzeichnet, dass** die obere Anlagefläche (11a) des Elements (11) der unteren Oberfläche eines verdrehten Einzelblattes entspricht, das unter einer negativen Steigung festgestellt ist.

5. Strömungsgetragenes Luftfahrzeug nach einem der vorhergehenden Ansprüche, **dadurch gekennzeichnet, dass** die Anlage des Strukturelements (11) unter dem Einzelblatt (6) unter Spannung gegen den sich drehenden Flügel erfolgt, sodass das Blatt und das Element so gut wie möglich verbunden werden.

6. Strömungsgetragenes Luftfahrzeug nach Anspruch 5, **dadurch gekennzeichnet, dass** die Anlagespannung durch Ansaugen zwischen dem Blatt und dem Element erreicht wird.

7. Strömungsgetragenes Luftfahrzeug nach einem der vorhergehenden Ansprüche, **dadurch gekennzeichnet, dass** ein elastisch komprimierbarer Belag die obere Oberfläche (11) des Strukturelements abdeckt, um gleichzeitig die Elastizität der Anlage, den Schutz der in Kontakt stehenden Teile und gegebenenfalls die Dichtheit des Kontakts sicherzustellen.

8. Strömungsgetragenes Luftfahrzeug nach einem der vorhergehenden Ansprüche, **dadurch gekennzeichnet, dass** das Strukturelement (11) mit dem gennannten Einzelblatt (6) über seine Länge in Kontakt kommt.

9. Strömungsgetragenes Luftfahrzeug nach einem der vorhergehenden Ansprüche, **dadurch gekennzeichnet, dass** der sich drehende Flügel ein zweites Einzelblatt (7) auf der Oberseite des Rumpfes (1) und hinter dem oben genannten ersten Einzelblatt (6) und gegenläufig in Bezug auf das letztgenannte umfasst, dass ein begrenzter Raum das erste Einzelblatt und das Gegengewicht (7d) des zweiten Einzelblattes (7) trennt und dass das bewegliche Strukturelement (11) an den angrenzenden Enden des Blattes (6) und des Gegengewichts (7d) zur Anlage kommt, um sie in Ausrichtung zueinander zu blockieren.

10. Strömungsgetragenes Luftfahrzeug nach Anspruch 9, **dadurch gekennzeichnet, dass** die obere Oberfläche (11a) des beweglichen Strukturelements (11) ein Reliefelement (11b) umfasst, um den begrenzten Raum, der die beiden aufeinanderfolgenden Blätter (6, 7) trennt, auszufüllen.

11. Strömungsgetragenes Luftfahrzeug nach einem der Ansprüche 9 und 10, **dadurch gekennzeichnet, dass** es mindestens einen Zweiblatt-Drehflügel (14) umfasst, der sich auf der Oberseite des Rumpfes zwischen den beiden oben genannten Einzelblättern (6, 9) befindet, dass die begrenzten Räume die aufeinanderfolgenden Blätter in ihrer Aufbewahrungsposition trennen und dass das bewegliche Strukturelement Reliefelemente umfasst, um die begrenzten Räume, die zwei aufeinanderfolgende Blätter trennen, auszufüllen.

12. Strömungsgetragenes Luftfahrzeug nach einem der Ansprüche 9 bis 11, **dadurch gekennzeichnet, dass**, da der Rumpf (1) einen vorderen Teil (1b) aufweist, der in Bezug auf seine Rollachse (1a) tiefer liegt, sich der Rotormast (8) des vorderen Einzelblattes (6) im Wesentlichen an der Verbindung dieses Teils mit dem Hauptteil des Rumpfes befindet und so eine Neigung der Rotorscheibe (R1) nach unten und zum vorderen Teil des Rumpfes um die oben genannte senkrechte Achse gestattet.

13. Strömungsgetragenes Luftfahrzeug nach Anspruch 12, **dadurch gekennzeichnet, dass** es Mittel zum Begrenzen der Neigung (A) der von dem genannten Einzelblatt (6) gebildeten Rotorscheibe (R1) um die Querachse auf höchstens fünf, vorzugsweise höchstens zwei Winkelgrade nach oben und nach hinten umfasst.

14. Strömungsgetragenes Luftfahrzeug nach einem der Ansprüche 9 bis 13, **dadurch gekennzeichnet, dass**, da der Rumpf (1) einen hinteren Teil (1c) aufweist, der in Bezug auf seine Rollachse (1a) tiefer liegt, sich der Rotormast (9) des hinteren Einzelblattes (7) im Wesentlichen an der Verbindung dieses Teils mit dem Hauptteil des Rumpfes befindet und so eine Neigung der Rotorscheibe (R2) nach unten und zum hinteren Teil des Rumpfes (1) um die oben genannte senkrechte Achse ermöglicht.

15. Strömungsgetragenes Luftfahrzeug nach einem der Ansprüche 9 bis 14, **dadurch gekennzeichnet, dass** der Teil des vorderen Einzelblattes (6), der das Gegengewicht (6d) trägt, ausgespart ist.

16. Strömungsgetragenes Luftfahrzeug nach Anspruch 9, **dadurch gekennzeichnet, dass** die Rotorscheiben (R1, R2) derart sind, dass ihre Projektion auf eine horizontale Ebene einen Schnittbereich (Z) umfasst.

17. Strömungsgetragenes Luftfahrzeug nach Anspruch 16, **dadurch gekennzeichnet, dass** der starre Flügel einen Hauptflügel (2, 3) quer zum Rumpf (1) umfasst, wobei der oben genannte Schnittbereich (Z) vor der horizontalen Projektion dieses Hauptflügels liegt.

18. Strömungsgetragenes Luftfahrzeug nach Anspruch 16, **dadurch gekennzeichnet, dass** der starre Flügel einen Hauptflügel (2, 3) quer zum Rumpf (1) umfasst, wobei der oben genannte Schnittbereich (Z) den aerodynamischen Mittelpunkt (F) des Auftriebs dieses Hauptflügels umfasst.

19. Strömungsgetragenes Luftfahrzeug nach einem der Ansprüche 9 bis 18, **dadurch gekennzeichnet, dass** die Durchmesser der Rotorscheiben (R1, R2) verschieden sind.

20. Strömungsgetragenes Luftfahrzeug nach einem der Ansprüche 17 und 18, **dadurch gekennzeichnet, dass** der starre Flügel vertikal umklappbare Klappen (2a, 2b, 3a, 3b) umfasst.

21. Strömungsgetragenes Luftfahrzeug nach einem der vorhergehenden Ansprüche, **dadurch gekennzeichnet, dass** das strömungsgetragene Luftfahrzeug ein Leitwerk (4) in H-Form, U-Form oder in umgedrehter V-Form besitzt.

22. Verfahren zum Manövrieren eines strömungsgetragenen Luftfahrzeugs nach einem der vorhergehenden Ansprüche, **dadurch gekennzeichnet, dass** jede Übergangsphase einen Zustand des sich drehenden Flügels umfasst, in dem das bewegliche Strukturelement von jedem Einzelblatt beabstandet ist, wobei die Rotationsgeschwindigkeit des sich drehenden Flügels größer als 10% der nominalen Rotationsgeschwindigkeit ist, die Steigung jedes Einzelblattes soweit reduziert wird, bis sie keine Auftriebskraft mehr bereitstellt und die Quergelenkverbindung des Einzelblattes an der Rotorwelle in einer Position derart blockiert wird, dass das Einzelblatt senkrecht zur Rotorwelle ist.

## Claims

1. Hybrid aerodyne including a fuselage (1), a fixed wing (2, 3, 4, 5) and a rotary wing (6, 7) capable of being immobilized in cruising flight of the aerodyne, the rotary wing being able to produce lift by its rotation in a vertical flight phase and to be immobilized and stored longitudinally in a cruise flight phase, of the type including at least one single-blade (6) with a counterweight (6d) situated at the top and at the front of the fuselage (1), said single-blade being articulated about an axis perpendicular to the axis of rotation of the rotor, substantially at the level of said axis of rotation of the rotor mast,
**characterized in that** it includes a structural element (11) carried by the fuselage and movable relative to the latter between an out-of-service position spaced from the rotary wing below the latter and an in-service position projecting from the outer surface of the fuselage in which it comes into contact with at least the end of said single-blade (6) of the rotary wing when the latter is stopped longitudinally to lock it relative to the fuselage (1).

2. Aerodyne according to claim 1, **characterized in that** this element (11) has an upper surface (11a) whose profile shape corresponds to that of the lower face of said single-blade (6).

3. Aerodyne according to claim 2, **characterized in that** the upper bearing surface (11a) of the element (11) corresponds to the lower surface of a flat single-blade immobilized at zero pitch.

4. Aerodyne according to claim 2, **characterized in that** the upper bearing surface (11a) of the element (11) corresponds to the lower surface of a twisted single-blade immobilized at a negative pitch.

5. Aerodyne according to any one of the preceding claims, **characterized in that** the bearing of the structural element (11) under the single-blade (6) is produced under stress against the rotary wing so as to secure as much as possible the blade and the element.

6. Aerodyne according to claim 5, **characterized in that** the bearing stress is obtained by suction between the blade and the element.

7. Aerodyne according to any one of the preceding claims, **characterized in that** an elastically compressible lining covers the upper surface (11a) of the structural element to ensure the elasticity of the support, protection of the parts in contact and where applicable the sealing of the contact.

8. Aerodyne according to any one of the preceding claims, **characterized in that** the structural element (11) comes into contact with said single-blade (6) along its length.

9. Aerodyne according to any one of the preceding claims, **characterized in that** the rotary wing includes a second single-blade (7) at the top of the fuselage (1) and at the rear of the aforesaid first single-blade (6) and contra-rotating with respect to the latter, **in that** a restricted space separates the first single-blade and the counterweight (7d) from the second single-blade (7), and **in that** the mobile structural element (11) comes to bear against the adjacent ends of the blade (6) and of the counterweight (7d) to lock them in alignment relative to each other.

10. Aerodyne according to claim 9, **characterized in that** the upper surface (11a) of the mobile structural element (11) includes a relief (11b) to fill the restricted space separating two successive blades (6, 7).

11. Aerodyne according to either one of claims 9 and 10, **characterized in that** it includes at least one two-bladed rotary wing (14) located at the top of the fuselage between the two aforementioned single-blades (6, 9), **in that** restricted spaces separate the successive blades in their storage position, and **in that** the mobile structural element includes reliefs to fill the restricted spaces separating two successive blades.

12. Aerodyne according to any one of claims 9 to 11, **characterized in that** the fuselage (1) having a front part (lb) dipping with respect to its roll axis (1a), the rotor mast (8) of the front single-blade (6) is located substantially at the junction of this part with the main part of the fuselage, thus allowing tilting of the rotor disc (R1) downwards and towards the front of the fuselage about the aforesaid perpendicular axis.

13. Aerodyne according to claim 12, **characterized in that** it includes means for limiting the inclination (A) of the rotor disc (R1) formed by said single-blade (6) about the transverse axis to at most five, preferably at most two, degrees of angle upwards and rearwards.

14. Aerodyne according to any one of claims 9 to 13, **characterized in that** the fuselage (1) having a rear part (1c) dipping with respect to its roll axis (1a), the rotor mast (9) of the rear single-blade (7) is situated substantially at the junction of this part with the main part of the fuselage, thus allowing an inclination of the rotor disc (R2) downwards and towards the rear of the fuselage, about the aforesaid perpendicular axis.

15. Aerodyne according to any one of claims 9 to 14, **characterized in that** the part of the front single-blade (6) which carries the counterweight (6d) is open.

16. Aerodyne according to claim 9, **characterized in that** the rotor discs (R1, R2) are such that their projection on a horizontal plane includes an intersection zone (Z).

17. Aerodyne according to claim 16, **characterized in that** the fixed wing includes a main wing (2,3) transverse to the fuselage (1) and the aforesaid intersection zone (Z) is forward of the horizontal projection of this main wing.

18. Aerodyne according to claim 16, **characterized in that** the fixed wing includes a main wing (2, 3) transverse to the fuselage (1) and the aforesaid intersection zone (Z) contains the lift focus (F) of this main wing.

19. Aerodyne according to any one of claims 9 to 18, **characterized in that** the diameters of the rotor discs (R1, R2) are different.

20. Aerodyne according to either one of claims 17 or 18, **characterized in that** the fixed wing includes vertically foldable flaps (2a, 2b, 3a, 3b).

21. Aerodyne according to any one of the preceding claims, **characterized in that** the aerodyne has an inverted H-shape, U-shape or V-shape tail section (4).

22. Procedure for manoeuvring an aerodyne according to any one of the preceding claims, **characterized in that** each transition phase includes a state of the rotary wing in which the mobile structural element is separated from each single-blade, the rotation speed of the rotary wing is greater than 10% of the nominal rotational speed, the pitch of each single-blade is reduced until there is no longer any lift force, and the transverse articulation of the single-blade on the rotor shaft is locked in a position such that the single-blade is perpendicular to the rotor shaft.
